# EUROPEAN PATENT SPECIFICATION

(11) **EP 2 214 510 B1**
(45) Date of publication and mention of the grant of the patent: **16.08.2017**
(21) Application number: 08851055.7
(22) Date of filing: 20.11.2008
(51) Int. Cl.: A23L 5/20, A23L 3/16, A23L 29/238, A23L 33/00

(54) **TREATING LOCUST BEAN GUM POWDER**
BEHANDLUNG VON JOHANNISBROTKERNMEHLPULVER
TRAITEMENT DE POUDRE DE GOMME DE CAROUBE

(30) Priority: 20.11.2007 WO PCT/NL2007/050577
(43) Date of publication of application: 11.08.2010
(73) Proprietor: N.V. Nutricia, 2712 HM Zoetermeer (NL)
(72) Inventor: BUIJSSE, Carla Angèle Paula, NL-6706 EE Wageningen (NL); SNOEREN, Thomas Hubertus Martinus, NL-8334 NE Steenwijk (NL)
(74) Representative: Nederlandsch Octrooibureau
(86) International application number: PCT/EP2008/065930
(87) International publication number: WO 2009/065900

(56) References cited:
- GB-A- 450 596
- JP-A- 7 184 565
- JP-A- 2003 245 039
- US-A- 3 855 149
- US-B2- 6 589 576

## Description

### FIELD OF THE INVENTION

The present invention relates to treatment of gum powders.

### BACKGROUND OF THE INVENTION

In the field of infant nutrition the use of contaminated raw material is particularly undesirable, as this may result in contamination of the food. However, treatment of raw materials and/or nutritional compositions wherein said raw materials are incorporated is often delicate as functional properties of the substances may be changed due to the treatment.

Locust bean gum is a vegetable gum extracted from the seeds of the Carob tree and used in infant formula to prevent regurgitation of foodstuff by the infant. JP 2003-245039 describes a gastro-esophageal reflux suppressing milk formula and a method for producing the same.

JP 7184565 describes the sterilization of a slurry of locust bean gum granular material with oxidative bacteria at 60°C for 5 h for use in foodstuffs. GB 450,596 discloses the sterilization of sieved ground seeds of the carob bean by heating for 2 h at 110°C to drive off substantially all the water, followed by heating for 3 h at 130°C to sterilize the dried powder. The product obtained is used in preparations for protecting and sealing wounds. US 6,589,576 discloses the preparation of powdered pediatric formula including locust bean gum. US 3,855,149 concerns a method for increasing the cold water solubility of locust bean gum.

### SUMMARY OF THE INVENTION

Locust bean gum is used particularly in infant formula to prevent regurgitation of foodstuff by the infant. The locust bean gum (slightly) increases the viscosity of the infant formula to be consumed, resulting in a reduced consumption rate. In addition, the locust bean gum has a further thickening effect in the stomach, preventing regurgitation of the foodstuff. However, downside of the cold dispersible locust bean gum is that it is supplied to the factory producing the infant formula with a (too) high microbial load. Hence it is desirable to reduce this microbial load. It is however mandatory that the decontaminated locust bean gum continues to have the functional characteristics of the non-decontaminated products, particularly the thickening effects. Additionally it is undesirable to decontaminate the locust bean gum in an aqueous solution, as this will require heating and evaporation of the water, which are both expensive processing steps. Hence heating temperature, time of heat treatment and loss of functionality must be kept to a minimum

The present inventors found an effective way for decontaminating locust bean gum, in particular locust bean gum powder that is already dispersible in cold water, while retaining the functional properties of the locust bean gum powder. The present inventors found that heating locust bean gum powder, which is optionally slightly wetted, while mixing it already resulted in a powder with reduced content of live bacteria, while the important functional properties of the locust bean gum powder remained intact.

Locust bean gum powder that is already dispersible in cold water is also called cold dispersible locust bean gum powder or 'instant' or 'instantised locust bean gum powder. This thus concerns locust ben gum powder that according to the manufacturers thereof are supplied for and found suitable for application in, or in the manufacture of, foodstuffs.

### DETAILED DESCRIPTION OF PREFFERED EMBODIMENTS

The present invention provides a process for decontaminating locust bean gum powder said process comprising subjecting a locust bean gum powder to a heat treatment. Decontamination as used herein means reducing the microbial load. Examples of decontamination are sterilization and pasteurization.

The invention concerns a process for treating cold dispersible locust bean gum (LBG) powder, said process comprising
i) heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 80° and 120° Celsius; or
ii) heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 120° and 150° Celsius for 1 to 60 minutes.

### Locust bean gum powder

Locust Bean Gum (LBG), also referred to as Carob Bean Gum is a product of the tree *Ceratonia siliqua* of the family Leguminous. The carob tree produces long pods that upon removal of the outer husk and central germ expose the layer of endosperm. It is this endosperm that is normally the source of the desired gum. Locust Bean Gum is known to be a galactomannan. Galactomannans usually are defined as polysaccharides consisting of a mannose backbone with galactose side groups. More specifically, the present LBG can be described as a (1-4)-linked beta-D-mannan backbone with branchpoints from 6-positions linked to alpha-D-galactose, i.e. 1-6-linked alpha-D-galactose side groups.

A number of grades of LBG are available, and for each grade it is possible to have different particle sizes according to the requirements of the end user. According to the present process, preferably LBG powder is treated, wherein less than 20 wt. % of the LBG particles has a particle size larger than 200 micrometer, preferably less than 10 wt. % has a particle size larger than 200 micrometer. A lower particle size ensures a good dispersibility and enables decontamination with the present process.

The present invention is particularly suitable for treating cold-dispersible LBG. Cold dispersible LBG gives an increased viscosity in an aqueous solution without heat treatment to at least gelatinization temperature. The gelatinization temperature is typically about 80°C. Cold dispersible LBG typically has been (partially) pregelatinized by dissolving LBG in water, heat treating and re-drying to form a powder. The powder is thus made "instant" or "instantised". The cold dispersible LBG to be treated can be characterized by having a viscosity of at least 100 mPas at 20°C at a shear rate of 100/sec when dissolved in water in a concentration of 1% (1 gram locust bean gum per 100 ml water), preferably at least 200 mPas at 20°C at a shear rate of 100/sec, more preferably at least 250 mPas at 20°C at a shear rate of 100/sec. The present inventors found that the main benefits of cold dispersible LBG remain intact after treatment according to the present process.

The present LBG powder contains at least 10 wt.% LBG based on dry weight of the powder, preferably at least 20 wt.%, more preferably at least 60 wt.%, most preferably at least 95 wt.%.

### Process conditions

In the present process the LBG powder is subjected to a heat treatment, wherein the heat treatment comprises heating a powder containing at least 10 wt.% LBG based on dry weight of the powder.

The heat treatment involves i) heating said cold dispersible LBG powder having a viscosity of at least 100 mPas at 20°C at a shear rate of 100/sec when dissolved in water in a concentration of 1%, to a temperature between 80° and 120° Celsius. The heat treatment may also be carried out at higher temperatures, but then it is preferred the heating time is limited in order to prevent deterioration and hence loss of benefits of the treated LBG. Thus the heat treatment also involves heating said cold dispersible LBG powder having a viscosity of at least 100 mPas at 20°C at a shear rate of 100/sec when dissolved in water in a concentration of 1%, to a temperature between 120° and 150° Celsius for 1 to 60 minutes.

The heat treatment works exceptionally well when the LBG powder has a certain water content which ensures an improved heat transfer, resulting in a faster inactivation of microorganisms. Moreover, the inactivation rate is higher at an increased water activity. Hence, in one preferred embodiment water is added before heat treatment to the LBG powder by spraying water, more preferably by adding steam (e.g. steam injection). Preferably the steam is saturated, and preferably has a temperature of 100 °C to 150 °C. When steam is added, the powder is wetted by condensation of the steam onto the powder particles. Preferably the LBG powder is heated while steam is added. Preferably the powder has a temperature between 0° and 40° Celsius when water or steam is added, preferably between 0° and 25° Celsius.

In a further preferred embodiment the heat treatment is given to the LBG powder when the cold dispersible LBG is dried, i.e. directly after the powder is instantised, i.e. the process wherein the LBG is transferred from naturally occurring LBG to cold dispersible LBG. Thus in one embodiment of the present process the heating and/or maintaining the temperature is combined with the final drying step in a process of preparing LBG powder, preferably in a process of preparing cold dispersible LBG powder. Further, the invention also concerns a process for preparing decontaminated cold dispersible LBG powder, said process comprising the steps known per se of preparing cold dispersible LBG powder and further comprising the step of heating i) heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 80° and 120° Celsius; or ii) heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 120° and 150° Celsius for 1 to 60 minutes. Preferably the heating step is combined with the final drying step in the process known per se of preparing cold dispersible LBG.

In the heat treatment, the powder is preferably heated to a temperature between 80° and 100° Celsius. Reduced heating ensures reduced energy costs, reduced formation of undesirable by-products and/or improved or unchanged functional properties of the LBG. The powder is preferably kept at a high temperature (see above) for 1 to 60 minutes, preferably 3 to 30 minutes, more preferably 5 to 20 minutes.

Mixing ensures a uniform heat transfer. Hence, the powder is preferably mixed while being subjected to the heat treatment. Lack of mixing has the risk of local overheating, resulting in a loss of functionality and/or local under-heating with the undesirable effect that the particles are not decontaminated. Preferably the LBG is continuously mixed while subjected to the heat treatment, for example in a tumbler or preferably using a mixer, or is continuously mixed by other means known in the art.

The LBG powder is preferably dried after the heat treatment to reduce microbial growth. Preferably the LBG powder is dried under vacuum. The LBG powder composition obtained by the present process (e.g. with reduced microbial load) preferably has a water content of 2 - 15 wt.%, based on total weight. Preferably LBG powder subjected to the present process (e.g. prior to wetting) has a water content of 2 - 15 wt.% based on total weight. Preferably the powder obtained after the present process has an (off) white color.

Preferably the LBG powder obtained by the present process has a viscosity of at least 100 mPas at 20°C at a shear rate of 100/sec when dissolved in water in a concentration of 1% (1 gram locust bean gum per 100 ml water), preferably at least 200 mPas at 20°C at a shear rate of 100/sec, more preferably at least 250 mPas at 20°C at a shear rate of 100/sec. Preferably LBG powder subjected to the present process (prior to wetting) has a viscosity of at least 100 mPas at 20°C at a shear rate of 100/sec when dissolved in water in a concentration of 1% (1 gram locust bean gum per 100 ml water), preferably at least 200 mPas at 20°C at a shear rate of 100/sec, more preferably at least 250 mPas at 20°C at a shear rate of 100/sec.

In a further preferred embodiment, the present heat treated LBG powder is used in the manufacture of a nutritional product or nutritional composition, preferably an infant formula. Hence, preferably the heat treated LBG powder obtained by the present process is admixed with a composition containing protein, fat and carbohydrate.

### EXAMPLES

### Example 1

Entero strains of Leclercia adecarboxylata were added to cold dispersible locust bean gum powder containing 100 wt.% locust bean gum based on total dry weight (CD-LBG 860, Danisco) and 10 wt.% water. The powder was slightly wetted to 20 wt.% water and heated to 80°C and kept at this temperature for 20 minutes (while continuously mixing). After heating, the powder was dried and allowed to cool to room temperature and tested for microbial load. No live organisms of the added entero strain could be detected anymore in the locust bean gum powder.

The same experiment was carried out with variations in water content, heating temperature and heating time. In particular powder compositions with the added entero strain having moisture contents of 18% and 27% were heated at 80°C, 100°C, 120°C and 140°C for 10 and 30 minutes. In all examples no live organisms of the added entero strain could be detected.

### Example 2

Cold dispersible locust bean gum powder containing 100 wt.% locust bean gum based on total dry weight (CD-LBG 860, Danisco) was wetted with buffer containing Enterobacter Sakazakii. Amounts of 5, 15 and 25 g buffer/100g powder were added. In the contaminated powders the counts of E. Sakazakii varied between 2.10⁷ and 7.10⁸ cfu per gram powder. The powders were heated for 10 and 30 minutes at 80 and 100°C. In all samples no E. Sakazakii could be detected anymore.

### Example 3

Cold dispersible locust bean gum powder containing 100 wt.% locust bean gum based on total dry weight (CD-LBG 860, Danisco) was contaminated with freeze dried Enterobacter Sakazakii strains. Part of the contaminated powder was not wetted, and part of the contaminated powder was wetted with water at 5 and 15 ml water per 100g LBG powder. In the contaminated powders the E. Sakazakii counts were 1.10⁶. The contaminated powders were heated for 10 minutes at 90, 100 and 120°C. In all samples, both non-wetted and wetted powders, no E. Sakazakii was detected anymore.

### Example 4

LBG powder from a naturally contaminated batch LBG 860 (Danisco) was subjected to a heat treatment on industrial scale (batch size 50 kg). Different batches were heated at different temperatures, in a range of 70-115°C, with holding times of at least 10 minutes. In most trials no water at all was added to the batch, in some trials the powder was slightly wetted prior to heating. From each batch E. Sakazakii determinations were done in 50 samples of 100g. In the untreated (naturally contaminated) batch 49 of the 50 samples were found positive. In an additional MPN analysis on E.Sakazakii an MPN of 46/100g was found. The powder could be decontaminated below detection limit either by heating at a temperature of 95°C for 20 minutes (no E.Sakazakii positives in 50 samples of 100g), or by slightly wetting and consequent heating for 10 minutes at 95°C, or by heating for 10 minutes at a further increased temperature, e.g. 115°C.

## Claims

1. A process for treating cold dispersible locust bean gum (LBG) powder, said process comprising
i. heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 80° and 120° Celsius; or
ii. heating a powder containing at least 10 wt.% cold dispersible LBG, based on dry weight of the powder and having a viscosity of at least 100 mPas at 20°C at a shear rate of 100/sec when dissolved in water in a concentration of 1%, to a temperature between 120° and 150° Celsius for 1 to 60 minutes.

2. The process according to claim 1, wherein the treatment is for decontaminating locust bean gum (LBG) powder.

3. The process according to any one of the preceding claims, wherein the cold dispersible LBG powder is continuously mixed during the heat treatment.

4. The process according to any one of the preceding claims wherein the cold dispersible LBG powder has a viscosity of at least 200 mPas at 20°C at a shear rate of 100/sec when dissolved in water in a concentration of 1%.

5. The process according to any one of the preceding claims, wherein the heat treated cold dispersible LBG powder has a viscosity of at least 100 mPas at 20°C at a shear rate of 100/sec. when dissolved in water in a concentration of 1%.

6. A process of preparing a nutritional composition, preferably an infant formula, said process comprising admixing the LBG powder obtained by the process according to any one of the preceding claims with a composition containing protein, fat and carbohydrate.

7. The process according to any one of the preceding claims, wherein the cold dispersible LBG powder contains at least 50 wt.% LBG based on total dry weight of the powder.

## Patentansprüche

1. Verfahren zur Behandlung von kalt-dispergierbarem Johannisbrotkernmehl (LBG)-Pulver, wobei das Verfahren
i. Erwärmen eines Pulvers, das mindestens 10 Gew.-% an kalt-dispergierbarem LBG, bezogen auf das Trockengewicht des Pulvers, enthält und das eine Viskosität von mindestens 100 mPas bei 20°C bei einer Scherrate von 100/sec aufweist, wenn es in einer Konzentration von 1 % in Wasser gelöst wird, auf eine Temperatur zwischen 80° und 120° Celsius; oder
ii. Erwärmen eines Pulvers, das mindestens 10 Gew.-% an kalt-dispergierbarem LBG, bezogen auf das Trockengewicht des Pulvers, enthält und das eine Viskosität von mindestens 100 mPas bei 20°C bei einer Scherrate von 100/sec aufweist, wenn es in einer Konzentration von 1 % in Wasser gelöst wird, auf eine Temperatur zwischen 120° und 150° Celsius für 1 bis 60 Minuten,
umfasst.

2. Verfahren gemäß Anspruch 1, wobei die Behandlung zur Dekontaminierung von Johannisbrotkernmehl (LBG)-Pulver dient.

3. Verfahren gemäß irgendeinem der vorhergehenden Ansprüche, wobei das kalt-dispergierbare LBG-Pulver während der Wärmebehandlung kontinuierlich gemischt wird.

4. Verfahren gemäß irgendeinem der vorhergehenden Ansprüche, wobei das kalt-dispergierbare LBG-Pulver eine Viskosität von mindestens 200 mPas bei 20°C bei einer Scherrate von 100/sec aufweist, wenn es in einer Konzentration von 1 % in Wasser gelöst wird.

5. Verfahren gemäß irgendeinem der vorhergehenden Ansprüche, wobei das wärmebehandelte kalt-dispergierbare LBG-Pulver eine Viskosität von mindestens 100 mPas bei 20°C bei einer Scherrate von 100/sec aufweist, wenn es in einer Konzentration von 1 % in Wasser gelöst wird.

6. Verfahren zur Herstellung einer Nährstoffzusammensetzung, vorzugsweise einer Säuglingsanfangsnahrung, wobei das Verfahren das Vermischen des LBG-Pulvers, erhalten nach dem Verfahren gemäß irgendeinem der vorhergehenden Ansprüche, mit einer Zusammensetzung, die Protein, Fett und Kohlenhydrat enthält, umfasst.

7. Verfahren gemäß irgendeinem der vorhergehenden Ansprüche, wobei das kalt-dispergierbare LBG-Pulver mindestens 50 Gew.-% LBG, bezogen auf das Trockengewicht des Pulvers, enthält.

## Revendications

1. Procédé de traitement d'une poudre de gomme de graines de caroube dispersible à froid (LBG), ledit procédé comprenant
i. chauffer une poudre contenant au moins 10 % en poids de LBG dispersible à froid, sur la base du poids sec de la poudre et ayant une viscosité d'au moins 100 MPa à 20°C à une vitesse de cisaillement de 100/sec lorsqu'elle est dissoute dans de l'eau à une concentration de 1 %, jusqu'à une température comprise entre 80° et 120°C ; ou
ii. chauffer une poudre contenant au moins 10 % en poids de LBG dispersible à froid, sur la base du poids sec de la poudre et ayant une viscosité d'au moins 100 MPa à 20°C à une vitesse de cisaillement de 100/sec lorsqu'elle est dissoute dans de l'eau à une concentration de 1 %, jusqu'à une température comprise entre 120 et 150°Celsius pendant 1 à 60 minutes.

2. Procédé selon la revendication 1, dans lequel le traitement est destiné à décontaminer la poudre de gomme de graines de caroube (LBG).

3. Procédé selon l'une quelconque des revendications précédentes, dans lequel la poudre de LBG dispersible à froid est mélangée en continu pendant le traitement thermique.

4. Procédé selon l'une quelconque des revendications précédentes, dans lequel la poudre de LBG dispersible à froid a une viscosité d'au moins 200 MPa à 20°C à une vitesse de cisaillement de 100/sec lorsqu'elle est dissoute dans de l'eau à une concentration de 1 %.

5. Procédé selon l'une quelconque des revendications précédentes, dans lequel la poudre de LBG dispersible à froid traitée thermiquement a une viscosité d'au moins 100 MPa à 20°C à une vitesse de cisaillement de 100/sec lorsqu'elle est dissoute dans de l'eau à une concentration de 1 %.

6. Procédé de préparation d'une composition nutritionnelle, de préférence une formule pour nourrissons, ledit procédé comprenant le mélange de la poudre de LBG obtenue par le procédé selon l'une quelconque des revendications précédentes avec une composition contenant des protéines, des lipides et des glucides.

7. Procédé selon l'une quelconque des revendications précédentes, dans lequel la poudre de LBG dispersible à froid contient au moins 50 % en poids de LBG sur la base du poids sec total de la poudre.
